(19) 

Europäisches
Patentamt
European
Patent Office
Office européen
des brevets

(11) **EP 3 385 238 A1**

(12) **EUROPEAN PATENT APPLICATION**
published in accordance with Art. 153(4) EPC

(43) Date of publication:
**10.10.2018 Bulletin 2018/41**

(21) Application number: **16870819.6**

(22) Date of filing: **02.12.2016**

(51) Int Cl.:
***C03C 27/12*** (2006.01)      ***B60J 1/00*** (2006.01)

(86) International application number:
**PCT/JP2016/085901**

(87) International publication number:
**WO 2017/094884 (08.06.2017 Gazette 2017/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.12.2015 JP 2015237113**

(71) Applicant: **AGC Inc.**
**Tokyo 100-8405 (JP)**

(72) Inventors:
• **NAKAMURA Atsushi**
  **Tokyo 100-8405 (JP)**
• **NISHIHAMA Jirou**
  **Tokyo 100-8405 (JP)**

(74) Representative: **Müller-Boré & Partner**
**Patentanwälte PartG mbB**
**Friedenheimer Brücke 21**
**80639 München (DE)**

(54) **LAMINATED GLASS FOR VEHICLES**

(57)     Provided is an automotive laminated glass having quite an excellent sound insulating property despite its light weight and having high foaming resistance and yellowing resistance. The automotive laminated glass has: three or more glass plates disposed in lamination; and a plurality of intermediate films each sandwiched between the respective glass plates, wherein, among the glass plates, a vehicle exterior-side glass plate positioned closest to a vehicle exterior side has a thickness of 1.4 mm to 2.5 mm, vehicle interior-side glass plates positioned closer to a vehicle interior side than the vehicle exterior-side glass plate each have a thickness smaller than the thickness of the vehicle exterior-side glass plate, and the automotive laminated glass has a surface density of 12 kg/m² or less.

FIG.1

EP 3 385 238 A1

**Description**

FIELD

The present invention relates to an automotive laminated glass.

BACKGROUND

In recent years, quietness in a vehicle interior of an automobile is increasingly demanded, and an automotive laminated glass used for a window is required to have a sound insulating property. Further, reduction in weight of the automotive laminated glass is desired in order for reduction in weight of the automobile. Here, typically, the laminated glass is provided with two or more glass plates and has a structure in which an intermediate film is sandwiched between each of the glass plates.

As the laminated glass improved in sound insulating property, Reference 1 suggests a laminated glass that has a structure in which three glass plates of 1.5 mm to 2.5 mm in thickness are each laminated via an intermediate film. Further, Reference 2 describes a laminated glass that has a structure in which a polymer intermediate film is interposed between two or more glass plates for the purpose of enhancing a sound insulating property, achieving weight reduction, and further, improving adhesiveness of the intermediate film to the glass plate, and so on.

However, the laminated glass described in Reference 1, though having the sound insulating property, is insufficient in terms of weight reduction since its main application is for construction. Here, while decrease in plate thickness of a glass plate leads to weight reduction of a laminated glass, a substantial problem occurs that a sound insulating property and durability are also reduced along with the decrease in plate thickness.

In particular, when the plate thickness of the glass plate is reduced, there has been a problem that amounts of ultraviolet ray and infrared ray which transmit the glass plate increase, which brings about deterioration of the intermediate film by foaming and yellowing. Deterioration of the intermediate film may cause reduction of the sound insulating property.

RELEVANT REFERENCES

Patent References

Reference 1: JP-A Hei 7-097241
Reference 2: JP-A 2015-527280

SUMMARY

PROBLEMS TO BE SOLVED BY THE INVENTION

The present invention is made in view of the aforementioned viewpoint and an object thereof is to provide an automotive laminated glass which, despite its light weight, has quite an excellent sound insulating property and has a foaming resistance and a yellowing resistance.

MEANS FOR SOLVING THE PROBLEMS

An automotive laminated glass of the present invention is an automotive laminated film that has: three or more glass plates disposed in lamination; and a plurality of intermediate films each sandwiched between the respective glass plates, wherein, among the glass plates, a vehicle exterior-side glass plate positioned closest to a vehicle exterior side has a thickness of 1.4 mm to 2.5 mm, vehicle interior-side glass plates positioned closer to a vehicle interior side than the vehicle exterior-side glass plate each have a thickness smaller than the thickness of the vehicle exterior-side glass plate, and the automotive laminated glass has a surface density of 12 kg/m$^2$ or less.

The automotive laminated glass preferably satisfies a formula (1) below.
[Numerical Formula 1]

$$\left| \left( \sum_{i=2}^{k} G_i + 0.44 \times \sum_{j=2}^{k-1} P_j \right) - G_1 \right| \leqq 1.02 \qquad \cdots (1)$$

k: number of glass plates in the automotive laminated glass

k - 1: number of intermediate films in the automotive laminated glass

$G_i$: thickness of i-th glass plate from vehicle exterior side (unit: mm)

$P_j$: thickness of j-th intermediate film from vehicle exterior side (unit: mm)

In the automotive laminated glass, the vehicle exterior-side glass plate has preferably an ultraviolet transmittance of 50% or less. Besides, the vehicle exterior-side glass plate has preferably a solar radiation transmittance of 80% or less.

In the automotive laminated glass, the vehicle interior-side glass plate has preferably thickness of a range of 0.5 mm to 1.3 mm.

In the automotive laminated glass, a ratio in thickness of the vehicle exterior-side glass plate to the glass plate positioned closest to the vehicle exterior side of the vehicle interior-side glass plates (thickness of the vehicle exterior-side glass plate (mm)/thickness of the glass plate positioned closest to the vehicle exterior side of the vehicle interior-side glass plates (mm)) is preferably 1.154 or more.

In the automotive laminated glass, each of the plurality of intermediate films has preferably a same thickness.

In the automotive laminated glass, a primary loss coefficient $\eta$ of 0 to 500 Hz by a mechanical impedance method (central excitation, half-power bandwidth method) based on ISO/PAS 16940:2004 is preferably 0.4 or more.

EFFECT OF THE INVENTION

According to the present invention, it is possible to provide an automotive laminated glass which, despite its light weight, has quite an excellent sound insulating property and has high foaming resistance and yellowing resistance.

BRIEF DESCRIPTION OF THE DRAWINGS

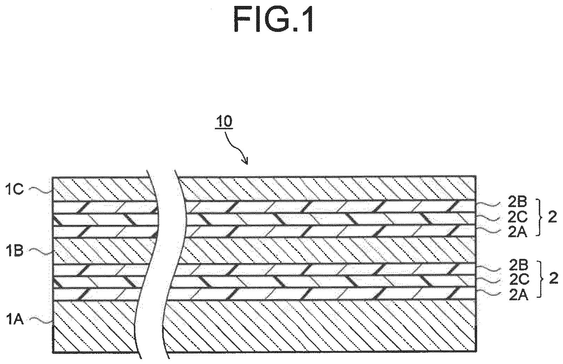

Fig. 1 is a cross-sectional view illustrating an automotive laminated glass being an embodiment of the present invention.

DETAILED DESCRIPTION

Hereinafter, embodiments of the present invention will be described. Note that the present invention is not limited to these embodiments and that these embodiments can be altered or modified without departing from the spirit and range of the present invention.

An automotive laminated glass being an embodiment of the present invention has three or more glass plates disposed in lamination and a plurality of intermediate films sandwiched between each of glass plates. The vehicle exterior-side glass plate positioned closest to a vehicle exterior side among the aforementioned glass plates is 1.4 mm to 2.5 mm in thickness, the vehicle interior-side glass plates positioned closer to a vehicle interior than the vehicle exterior-side glass plate are all smaller in thickness than the thickness of the vehicle exterior-side glass plate, and a surface density of the automotive laminated glass is 12 kg/m$^2$ or less.

The above automotive laminated glass is provided with the vehicle exterior-side glass plate and two or more vehicle interior-side glass plates and has the laminated structure in which the intermediate films are each provided between the vehicle exterior-side glass plate and the vehicle interior-side glass plate as well as between the vehicle interior-side glass plates, and is excellent in sound insulating property. The intermediate film in the automotive laminated glass of the present invention has a function which an intermediate film in a well-known automotive laminated glass normally has, that is, a function of bonding a pair of glass plates to integrate them as a laminated glass. The intermediate film may be a single layer film or may be a laminated film in which a plurality of layers are laminated.

The automotive laminated glass, the surface density thereof being 12 kg/m$^2$ or less, is lighter in weight compared with a conventional laminated glass using three or more glass plates of about 2 mm in glass plate thickness.

Further, in the automotive laminated glass, the thickness of the vehicle exterior-side glass plate is 1.4 mm to 2.5 mm, and the thickness of the vehicle interior-side glass plate is smaller than the thickness of the vehicle exterior-side glass plate. Therefore, the automotive laminated glass can make a transmission amount of ultraviolet ray and infrared ray from vehicle outside smaller while achieving weight reduction. Thereby, deterioration of the intermediate film disposed between each of the glass plates can be suppressed. Further, the automotive laminated glass also has a strength against a flying stone.

Hereinafter, an embodiment of the automotive laminated glass of the present invention will be described with reference to the drawing, by exemplifying a case of having a vehicle exterior-side glass plate, two vehicle interior side glass plates, and two intermediate films. Here, an example is shown in which a multilayer film of three layers is used as the intermediate film. Fig. 1 is a cross-sectional view illustrating one example of the automotive laminated glass of the present invention. The present invention is not limited to the following embodiment and modifications can be made such that the vehicle exterior-side glass plate, three or more vehicle interior-side glass plates and three or more intermediate films are used, and such that a single-layer film or a multilayer film of other than three layers is used as the intermediate film, for example. Explanation similar to the following can be applied also to those modifications.

An automotive laminated glass 10 illustrated in Fig. 1 has a vehicle exterior-side glass plate 1A, two vehicle interior-side glass plates 1B, 1C, and two intermediate films 2. The vehicle exterior-side glass plate 1A is disposed to face the vehicle interior-side glass plate 1B and the vehicle interior-side glass plate 1C is disposed to face an opposite side to the vehicle exterior-side glass plate 1A of the vehicle interior-side glass plate 1B. Two intermediate films 2 are each sandwiched between the vehicle exterior-side glass plate 1A and the vehicle interior-side glass plate 1B and between the vehicle interior side glass plates 1B and 1C.

The intermediate film 2 is composed of three layers including a pair of outer layers 2A, 2B and a core layer 2C sandwiched between the outer layers 2A and 2B. In the automotive laminated glass 10, regarding the intermediate film 2 sandwiched between the vehicle exterior-side glass plate 1A and the vehicle interior-side glass plate 1B, the outer layer 2A is disposed on a vehicle exterior-side glass plate 1A side, and the outer layer 2B is disposed on a vehicle interior-side glass plate 1B side. Regarding the intermediate film 2 sandwiched between the vehicle interior-side glass plates 1B and 1C, the outer layer 2A is disposed on a vehicle interior-side glass plate 1B side and the outer layer 2B is disposed on a vehicle interior-side glass plate 1C side. In the automotive laminated glass 10, the vehicle exterior-side glass plate 1A, the vehicle interior-side glass plates 1B, 1C, and the two intermediate films 2 have principal surfaces of almost the same shape and the same size.

Here, in this specification, "almost same shape and the same size" means having the same shape and the same size by human visual evaluation. For example, a case is included where a peripheral edge part of the vehicle exterior-side glass plate or the vehicle interior-side glass plate of the automotive laminated glass has a partial cutout or the like. Further, in the automotive laminated glass, the vehicle exterior side and the vehicle interior side mean a vehicle exterior side and a vehicle interior side when the automotive laminated glass is installed in an automobile, respectively. Hereinafter, each component constituting the automotive laminated glass 10 will be described.

[Vehicle Exterior-Side Glass Plate]

A plate thickness of the vehicle exterior-side glass plate 1A in the automotive laminated glass 10 is in a range of 1.4 mm to 2.5 mm By the plate thickness of the vehicle exterior-side glass plate 1A being 1.4 mm or more, amounts of ultraviolet ray and infrared ray transmitting the vehicle exterior-side glass plate 1A are made smaller, so that deterioration of the intermediate film 2 can be suppressed. Meanwhile, by the plate thickness of the vehicle exterior-side glass plate 1A being 2.5 mm or less, weight reduction when made into the automotive laminated glass 10 can be achieved. The plate thickness of the vehicle exterior-side glass plate 1A is preferably in a range of 1.5 mm to 2.4 mm, more preferably in a range of 1.7 mm to 2.4 mm, and further preferably in a range of 1.7 mm to 2.1 mm.

In view of suppressing deterioration of the intermediate film 2 when made into the automotive laminated glass 10, an ultraviolet transmittance (Tuv) of the vehicle exterior-side glass plate 1A measured in accordance with ISO 9050-1990 is preferably 50% or less and more preferably 45% or less. The ultraviolet transmittance (Tuv) of 50% or less can suppress yellowing of the intermediate film 2 due to ultraviolet ray.

Further, in view of suppressing deterioration of the intermediate film 2 when made into the automotive laminated glass 10, a solar radiation transmittance (Te) of the vehicle exterior-side glass plate 1A measured in accordance with JIS R3106 is preferably 80% or less and more preferably 75% or less. The solar radiation transmittance (Te) of 80% or less can suppress generation of foaming in the intermediate film due to exposure to infrared ray.

[Vehicle Interior-Side Glass Plate]

The plate thicknesses of the vehicle interior-side glass plates 1B, 1C in the automotive laminated glass 10 are configured to be smaller than the plate thickness of the vehicle exterior-side glass plate 1A. The plate thicknesses of the vehicle interior-side glass plates 1B, 1C may be the same to each other or may be different from each other. Further, the embodiment is not limited to the embodiment in which the number of the vehicle interior-side glass plates is two, but the number may be three or more. With regard to an automotive laminated glass having three or more vehicle interior-side glass plates, a preferable mode of each glass plate is the same as that of the automotive laminated glass 10 and the same effect can be obtained. In view of a balance between weight reduction and a physical property, the number of the vehicle interior-side glass plates is more preferable to be two.

The plate thicknesses of the vehicle interior-side glass plates 1B, 1C are in a range smaller than the plate thickness of the vehicle exterior-side glass plate 1A. The plate thickness is preferably in a range of 0.5 mm to 1.3 mm, and more preferably in a range of 0.9 mm to 1.3 mm. The thicknesses of the vehicle interior-side glass plates 1B, 1C of 0.5 mm or more enables an excellent sound insulating property. The thickness of 1.3 mm or less enables achievement of weight reduction when made into the automotive laminated glass.

Further, a ratio in thickness of the vehicle exterior-side glass plate 1A to the glass plate (vehicle interior-side glass plate 1B) positioned closest to the vehicle exterior side of the vehicle interior-side glass plates 1B, 1C (thickness of the vehicle-exterior side glass plate (mm)/thickness of the glass plate positioned closest to the vehicle exterior of the vehicle interior-side glass plates (mm)) is preferably 1.154 or more. The ratio in thickness of the glass plates of 1.154 or more enables quite an excellent sound insulating property when made into the automotive laminated glass.

The plate thicknesses of the vehicle interior-side glass plates 1B, 1C are preferable to be the same to each other. By the plate thicknesses of the vehicle interior-side glass plates 1B, 1C being the same to each other, the more excellent sound insulating property is achieved.

The ultraviolet transmittances (Tuv) of the vehicle interior-side glass plates 1B, 1C are preferably 50% or less and more preferably 45% or less. In particular, by the ultraviolet transmittance (Tuv) of the vehicle interior-side glass plate positioned closest to the vehicle exterior side of the vehicle interior-side glass plates being 50% or less, yellowing of the intermediate film due to ultraviolet ray is suppressed when made into the automotive laminated glass 10 and deterioration of the intermediate film can be suppressed.

The solar radiation transmittances (Te) of the vehicle interior-side glass plates 1B, 1C are preferably 80% or less and more preferably 75% or less. In particular, by the solar radiation transmittance (Te) of the vehicle interior-side glass plate positioned closest to the vehicle exterior side of the vehicle interior-side glass plates being 80% or less, occurrence of foaming in the intermediate film due to exposure to infrared ray is suppressed and deterioration of the intermediate film can be suppressed.

[Glass Plate]

In the automotive laminated glass 10 of this embodiment, a transparent inorganic glass or an organic glass (resin) is used as a material of the glass plates used for the vehicle exterior-side glass plate 1A and the vehicle interior-side glass plates 1B, 1C. As the inorganic glass, there are used a normal soda lime glass (also referred to as a soda lime silicate glass) used as an automotive glass, an aluminosilicate glass, a borosilicate glass, a non-alkali glass, a quartz glass, and so on, without particular limitation. The soda lime glass is especially preferable among the above. A molding method is not limited in particular, either, and the glass plate may be a float plate glass molded by a float method or the like, for example.

Further, the glass plate may be a glass plate to which an infrared absorbency or an ultraviolet absorbency is imparted by making the above-described inorganic glass or organic glass (resin) contain an infrared absorbent or an ultraviolet absorbent. As such a glass plate, there can be used a green glass plate, an ultraviolet absorbing (UV) green glass plate, or the like. The UV green glass plate indicates an ultraviolet absorbing green glass which contains 68 mass% or more and 74 mass% or less of $SiO_2$, 0.3 mass% or more and 1.0 mass% or less of $Fe_2O_3$, and 0.05 mass% or more and 0.5 mass% or less of Fe, and which is 1.5% or less in ultraviolet transmittance of a wavelength of 350 nm and has a minimum value of the transmittance in a region of 550 nm or more and 1700 nm or less. Further, the glass plate may have been subjected to tempering such as air-cooling tempering or chemical tempering. The vehicle interior-side glass plates 1B, 1C are preferable to have been subjected to chemical tempering, and the vehicle interior-side glass plates 1B, 1C, in a case of 1.0 mm or less in plate thickness, are more preferable to have been subjected to chemical tempering.

Examples of the organic glass (resin) include a polycarbonate resin, a polystyrene resin, an aromatic polyester resin, an acrylic resin, a polyester resin, a polyarylate resin, a polycondensate of halogenated bisphenol-A and ethylene glycol, an acrylic urethane resin, a halogenated aryl group-containing acrylic resin, and so on. Among the above, the polycarbonate resin such as an aromatic polycarbonate resin and the acrylic resin such as a polymethyl methacrylate-based acrylic resin are preferable and the polycarbonate resin is more preferable. Further, among the polycarbonate resin, a bisphenol A-based polycarbonate resin is particularly preferable. Note that the glass plate may be configured to contain two or more kinds of resins described above.

As the above-described glass, a transparent and colorless material to which a coloring component has not been added may be used, or a transparent and colored material which has been colored in a range not impairing an effect of the present invention may be used. Further, one kind of these glasses may be used independently or two or more kinds thereof may be used in combination, and the above-described glass may be a laminated glass laminated in two or more layers, for example.

The inorganic glass is preferable as the glass, though it depends on where the automotive laminated glass 10 is applied.

The vehicle exterior-side glass plate 1A and the vehicle interior-side glass plates 1B, 1C used for the automotive laminated glass 10 may be constituted by materials of kinds different from each other, but are preferable to be constituted by the material of the same kind. A shape of the vehicle exterior-side glass plate 1A and the vehicle interior-side glass plates 1B, 1C may be flat, and the entire surface or a part of the surface may have a curvature.

[Intermediate film]

The intermediate films 2 in the automotive laminated glass 10 are each made of three layers constituted by a pair of outer layers 2A, 2B and a core layer 2C sandwiched by the outer layers 2A, 2B, as illustrated in Fig. 1. The intermediate films 2 are each disposed between the vehicle exterior-side glass plate 1A and the vehicle interior-side glass plate 1B as well as between the vehicle interior-side glass plates 1B and 1C, and have a function of bonding the vehicle exterior-side glass plate 1A and the vehicle interior-side glass plate 1B as well as the vehicle interior-side glass plates 1B and 1C, respectively, to thereby integrate them as the laminated glass 10.

In a case where the automotive laminated glass has three or more vehicle interior-side glass plates, three or more intermediate films are each sandwiched between the vehicle exterior-side glass plate and the vehicle interior-side glass plate, and between the respective vehicle interior-side glass plates. Also in this case, a preferred mode of each intermediate film 2 is the same as that in the case of the automotive laminated glass 10, and the same effect can be obtained.

Film thicknesses of the two intermediate films 2 may be the same to each other or different from each other. The film thickness of the intermediate film 2, similarly to an intermediate film normally used in an automotive laminated glass, is preferably in a range of 0.3 mm to 1.0 mm and more preferably in a range of 0.4 mm to 0.9 mm. If the film thickness of the intermediate film 2 is less than 0.3 mm, a strength is sometimes insufficient, and if there is a large glass mismatch, peeling becomes more likely to occur. The film thickness of the intermediate film 2 over 1.0 mm may lead to occurrence of what is called a plate displacement phenomenon, that is, a phenomenon that displacement of respective glass plates between which the intermediate film 2 is sandwiched occurs in a later-described compression bonding process in fabricating the laminated glass 10 or in an endurance test (outdoor exposure test or high temperature test).

A film thickness of the two intermediate films 2 in total is preferably 0.6 mm to 2.0 mm. By the film thicknesses in total being 0.6 mm or more, excellent strength and sound insulating property can be obtained. Meanwhile, the film thicknesses in total of 2.0 mm or less can achieve weight reduction. The film thicknesses of the two intermediate films are preferable to be the same to each other since the sound insulating property is improved.

A layer thickness of the core layer 2C, though depending on layer thicknesses and physical properties of the outer layers 2A, 2B to be combined, is preferably 0.05 mm to 0.30 mm and more preferably 0.07 mm to 0.27 mm. Further, the layer thicknesses of the outer layers 2A, 2B, though depending on the physical properties of the outer layers 2A, 2B or the layer thickness and a physical property of the core layer 2C to be combined, are each preferably 0.1 mm to 0.7 mm and more preferably 0.2 mm to 0.5 mm.

Regarding a relation between the layer thickness of the core layer 2C and the layer thicknesses of the outer layers 2A and 2B, it suffices that a total thickness of the three layers is in the preferable range of the film thickness of the intermediate film 2 described above. Further, the layer thickness of the core layer 2C is preferably smaller than the layer thicknesses of the outer layers 2A, 2B. The layer thicknesses of the outer layers 2A, 2B are each preferably in a range of over 1 time and 5 times or less the layer thickness of the core layer 2C.

The layer thicknesses of the outer layers 2A, 2B may be the same or may be different. For example, in the automotive laminated glass 10, the outer layer 2B of the outer layers 2A, 2B is the outer layer positioned on a vehicle interior side. In this case, the layer thickness of the outer layer 2B on the vehicle interior side may be smaller than the layer thickness of the outer layer 2A on a vehicle exterior side, and the layer thickness of the outer layer 2A is preferably in a range of 0.3 to 1.0 times the layer thickness of the outer layer 2B.

Further, in the intermediate film 2, at least one of cross sections may have a wedge shape. The automotive laminated glass 10 having the intermediate film 2 with the wedge-shaped cross section is suitable for a head-up display. In this case, by at least one layer of the outer layers 2A, 2B and the core layer 2C being wedge-shaped in cross section, the intermediate film 2 is configured to be wedge-shaped in cross section. In a case where the intermediate film 2, the outer layers 2A, 2B or the core layer 2C is wedge-shaped, the above-described film thickness or layer thickness indicates a thickness of the thinnest portion.

It suffices that the core layer 2C and the outer layers 2A, 2B are constituted by materials normally used for an intermediate film of an automotive laminated glass. As such materials, thermoplastic resins often used as main materials are selected appropriately for each layer.

As such thermoplastic resins, there can be cited, concretely, a polyvinyl acetal resin, a polyvinyl butyral resin (PVB), a polyvinyl chloride resin (PVC), a saturated polyester resin, a polyurethane resin, an ethylene-vinyl acetate copolymer resin (EVA), an ethylene-ethyl acrylate copolymer resin, a cycloolefin polymer (COP), and so on. The thermoplastic resins may be used independently or two or more kinds thereof may be used in combination.

Further, the thermoplastic resin is selected in accordance with intended use of the automotive laminated glass 10 in view of the balance among various performances such as a transparency, a weather resistance, an adhesive force, a penetration resistance, an impact energy absorbency, a moisture resistance, a heat shield property, and so on. From such a viewpoint, as the thermoplastic resin constituting the core layer 2C, the PVB, the EVA, the polyurethane resin, and so on are preferable. A Tg (glass transition point) of the thermoplastic resin constituting the core layer 2C is preferably in a range of 0°C to 20°C. The outer layers 2A, 2B are each preferably constituted by the PVB, the EVA, the polyurethane resin, or the like.

To fabricate the core layer 2C and the outer layers 2A, 2B, thermoplastic resin-containing compositions which contain such thermoplastic resins as main materials are used. The thermoplastic resin-containing composition may contain one kind or two or more kinds of various additives such as, for example, an infrared absorbent, an ultraviolet absorbent, a fluorescer, an adhesion regulator, a coupling agent, a surface active agent, an antioxidant, a heat stabilizer, a light stabilizer, a dehydrating agent, a defoaming agent, an antistatic agent, a fire retardant, and so on, within a range not interfering with effects of the present invention and in accordance with various objects. These additives are contained uniformly all over the core layer 2C and the outer layers 2A, 2B.

In a case of containing the additive that imparts an additional function in particular, such as the infrared absorbent, the ultraviolet absorbent, and the fluorescer, among the above-described additives, the three layers of the core layer 2C and the outer layers 2A, 2B may have a configuration where only any one of the layers contains the above-described additive or a configuration where two or more layers contain the above-described additive. Further, in a case where the two or more layers contain the additives, each layer may contain the same amount or a different amount of the additive of the same kind, or each layer may contain different additives independently.

The intermediate film 2 is fabricated, for example, by preparing the core layer 2C and the outer layers 2A, 2B by forming the thermoplastic resin-containing components suitable for each layer into sheets, sandwiching the core layer 2C between the obtained outer layers 2A and 2B, and heating them under pressure to thereby integrate them. Conditions of heating and pressurizing are appropriately selected depending on the kinds of the thermoplastic resins.

[Automotive Laminated Glass]

The automotive laminated glass 10 of the embodiment, as described above, has the laminated structure constituted by the vehicle exterior-side glass plate 1A, the vehicle interior-side glass plates 1B, 1C, and the two intermediate films 2. Thereby, the automotive laminated glass 10 has the excellent sound insulating property. Besides, since the plate thicknesses of the vehicle exterior-side glass plate 1A and the vehicle interior-side glass plates 1B, 1C satisfy the predetermined condition described above, the automotive laminated glass 10 has a resistance against a flying stone, and, besides, deterioration of the intermediate film 2 due to ultraviolet ray or infrared ray is suppressed.

Further, the automotive laminated glass 10 preferably satisfy the following formula (1).

[Numerical Formula 2]

$$\left| \left( \sum_{i=2}^{k} G_i + 0.44 \times \sum_{j=2}^{k-1} P_j \right) - G_1 \right| \leq 1.02 \quad \cdots (1)$$

k: number of glass plates automotive laminated glass has
k - 1: number of intermediate films automotive laminated glass has
$G_i$: thickness of i-th glass plate from vehicle exterior side (unit: mm)
$P_j$: thickness of j-th intermediate film from vehicle exterior side (unit: mm)

The automotive laminated glass 10 satisfying the above formula (1) decreases a difference between the thickness of a lamination constituted by the vehicle interior-side glass plate positioned closest to the vehicle exterior side, the vehicle interior-side glass plate positioned closer to the vehicle interior side than it, and the intermediate film (a laminated body constituted by the vehicle interior-side glass plate 1B, the intermediate film 2, and the vehicle interior-side glass plate 1C) and the thickness of the vehicle exterior-side glass plate 1A, so that energy of a sound incoming from the outside becomes more likely to be blocked, to thereby improve the sound insulating property.

A primary loss coefficient η of 0 to 500 Hz measured in accordance with a mechanical impedance method (central excitation, half-power bandwidth method) based on ISO/PAS 16940:2004 of the automotive laminated glass 10 is preferably 0.4 or more and more preferably 0.45 or more. Further, the above-described primary loss coefficient η of the automotive laminated glass 10 is preferably 0.8 or less at a maximum. The primary loss coefficient η is an index indicating a sound insulating property, and the larger primary loss coefficient η indicates the better sound insulating property.

In the automotive laminated glass 10 of the embodiment, a visible light transmittance measured in accordance with JIS R3106 is preferably 70% or more and more preferably 74% or more. A Tts (Total solar energy transmitted through a glazing) measured in accordance with ISO 9050-1990 is preferably 66% or less and more preferably 60% or less.

(Other Layers)

The automotive laminated glass 10 of the embodiment may have a functional film between the vehicle exterior-side glass plate 1A and the vehicle interior-side glass plate 1B, and between the vehicle interior-side glass plates 1B and 1C, as other layers, within a range not interfering with effects of the present invention. If the functional film exists, a configuration is preferable, for example, that the intermediate film 2 is constituted by a plurality of layers and that the functional film is sandwiched between the plurality of layers of the intermediate film 2. That is, in this case, it is configured that the functional film is incorporated into the inside of the intermediate film 2.

As the functional film, an infrared shielding film or the like, for example, can be cited. As the infrared shielding film, there can be concretely cited one obtained by forming, as an infrared reflective film, a well-known infrared reflective film of about 100 nm to 500 nm in film thickness such as a single-layer or multilayer infrared reflective film or the like which includes a dielectric multilayer film, a liquid crystal alignment film, an infrared reflector-containing coating film, and a metal film, on a supporting film of about 25 $\mu$m to 200 $\mu$m in thickness such as a PET film. As the infrared shielding film, there can be cited a dielectric multilayer film or the like of about 25 $\mu$m to 200 $\mu$m in total film thickness in which a resin film of different refractive index is further laminated.

The automotive laminated glass 10 of the embodiment may have coatings as other layers which imparts a water repellent function, a hydrophilic function, an antifogging function or the like, on surfaces exposed to the atmosphere of the vehicle exterior-side glass plate 1A and the vehicle interior-side glass plate 1C. Further, facing surfaces that face another glass to each other of the vehicle exterior-side glass plate 1A and the vehicle interior-side glass plates 1B, 1C may have functional coatings which normally include metal layers, such as a low-radioactive coating, an infrared shielding coating, a conductive coating or the like.

In a case where the facing surfaces of the vehicle exterior-side glass plate 1A and the vehicle interior-side glass plates 1B, 1C have the above-described functional coatings, the outer layers 2A, 2B of the above-described intermediate film 2 are configured to be in contact with the functional coatings on the facing surfaces of the vehicle exterior-side glass plate 1A and the vehicle interior-side glass plates 1B, 1C.

The automotive laminated glass 10 of the embodiment may have a black ceramic layer in a band shape, as another layer, in a part or the entire of a peripheral edge portion of the automotive laminated glass 10 in order to conceal an installation part to a frame or the like of the automotive laminated glass, a wiring conductor and so on, for example. A width of the black ceramic layer is appropriately selected in accordance with intended use of the automotive laminated glass. For example, when the automotive laminated glass is a sun roof glass used for a ceiling portion of an automobile, the black ceramic layer is normally formed into a frame shape of about 10 mm to 100 mm in width. Further, when the automotive laminated glass is used for a side glass of an automobile, the black ceramic layer is normally formed into a band shape of about 30 mm to 200 mm in width.

The black ceramic layer can be formed into the above-described shape on a principal surface on the atmosphere side or the intermediate bonding layer side of the vehicle exterior-side glass plate 1A the automotive laminated glass 10 has, for example, by a normal method. A place where the black ceramic layer is formed is appropriately selected in accordance with intended use.

Note that "black" of the black ceramic layer does not mean black defined by three attributes of color or the like, for example, but includes a range recognizable as black which has been adjusted not to transmit visible light in a degree capable of concealing at least a portion required to be concealed. Therefore, in the black ceramic layer, the black may have shading as necessary within the range enabling this function, and a color shade may be somewhat different from the black defined by the three attributes of color. From the same viewpoint, the black ceramic layer may be configured such that the entire layer becomes a continuous integrated layer in accordance with the place to be disposed, and may be constituted by a dot pattern or the like in which a ratio of visible light transmittance can be easily adjusted by setting of a shape, layout, and so on.

[Manufacturing of Automotive Laminated Glass]

The automotive laminated glass 10 of this embodiment can be manufactured by a well-known method which is generally used. In the automotive laminated glass 10, first, the core layer 2C is sandwiched between the outer layers 2A and 2B as described above to thereby fabricate the intermediate film 2 (laminated structure of outer layer 2A, core layer 2C and outer layer 2B). The two intermediate films 2 are each inserted between the vehicle exterior-side glass plate 1A and the vehicle interior-side glass plate 1B as well as between the vehicle interior-side glass plates 1B and 1C, to thereby prepare an automotive laminated glass precursor before pressure bonding in which the vehicle exterior-side glass plate 1A, the intermediate film 2, the vehicle interior-side glass plate 1B, the intermediate film 2, and the vehicle interior-side glass plate 1C are laminated in sequence. Also in a case of having three or more vehicle interior-side glass plates and three or more intermediate films or a case of having other layers, an automotive laminated glass precursor is prepared in the same manner by laminating each glass plate and each layer in sequence to form a laminated structure the same as that of an automotive laminated glass to be obtained.

The automotive laminated glass precursor is put into a vacuum bag such as a rubber bag, the vacuum bag is connected to an exhaust system, and bonding is performed at a temperature of about 70°C to 110°C while pressure-reduction suction (deaeration) is performed so that a pressure inside the vacuum bag becomes a pressure reduction degree (absolute pressure) of about -65 kPa to -100 kPa, whereby the automotive laminate glass of the embodiment can be obtained. By further performing a pressure-bonding processing of heat pressuring under a condition of 100°C to 140°C and 0.6 MPa to 1.3 MPa in pressure for example, an automotive laminated glass more excellent in durability can be obtained.

Use of the automotive laminated glass 10 of this embodiment is not limited in particular. The automotive laminated glass 10 of this embodiment is preferable to be used as a windshield, a side glass, a sun roof glass, or a rear glass among automotive laminated glasses, and is particularly preferable to be used as the windshield or the side glass. An automobile windshield in particular is required to achieve weight reduction, a resistance against a flying stone, low deterioration of an intermediate film, and a high sound insulating property when a window is closed, and the automotive laminated glass 10 is a laminated glass which has a function to satisfy all of the above.

EXAMPLES

Hereinafter, the present invention will be described in more detail by examples. The present invention should not be limited in any way by embodiments or examples described below. Examples 1 to 13 are examples, and Examples 14 to 22 are comparative examples.

(Intermediate Film)

In the examples and comparative examples, there was each prepared an intermediate film of 0.50 mm in thickness in which a hard PVB (200 $\mu$m), a soft PVB (100 $\mu$m) and a hard PVB (200 $\mu$m) are laminated in sequence as an interior-side outer layer, a core layer, an exterior-side outer layer. Each of film thicknesses of the interior-side outer layer, the exterior-side outer layer, and the core layer was adjusted by being pressed at 150°C for 300 seconds and at a pressing pressure of 50 kg/cm$^2$ by a hot press forming machine. The intermediate film was designed such that, when made into the automotive laminated glass 10, the exterior-side outer layer becomes a vehicle exterior-side outer layer 2A and the interior-side outer layer becomes a vehicle interior-side outer layer 2B.

Further, as an intermediate film having a different thickness from that of the above-described intermediate film, there was prepared an intermediate film of 0.76 mm in thickness in which a hard PVB (330 $\mu$m), a soft PVB (100 $\mu$m) and a hard PVB (330 $\mu$m) are laminated in sequence as an interior-side outer layer, a core layer and an exterior-side outer layer. Each of film thicknesses of the interior-side outer layer, the exterior-side outer layer, and the core layer was adjusted similarly to the above-described intermediate film.

(Example 1)

There was fabricated an automotive laminated glass having a configuration listed in Table 1, i.e. having a laminated structure of: a vehicle exterior-side glass of 2 mm in thichness; an intermediate film of 0.5 mm in thickness; a vehicle interior-side glass of 1 mm in thickness, an intermediate film of 0.5 mm in thickness; a vehicle interior-side glass of 1 mm in thickness, by using the intermediate film of 0.5 mm in thickness prepared above. An ultraviolet absorbing green glass (manufactured by Asahi Glass Co., Ltd) was used as a glass plate. In a case of the ultraviolet absorbing green glass of 2.0 mm in thickness, an ultraviolet transmittance (Tuv) measured in accordance with ISO 9050-1990 is 42% and a solar radiation transmittance (Te) measured in accordance with JIS R3106 is 71%.

In order to obtain a configuration the same as that of the laminated glass of Fig. 1, a vehicle exterior-side glass, an intermediate film, a vehicle interior-side glass, an intermediate film, and a vehicle interior-side glass were laminated, and this laminated body was put into a vacuum bag to be subjected to preliminary pressure bonding at 110°C while deaeration was performed under pressure reduction of absolute pressure of - 60 kPa or less, and thereafter main pressure bonding was further performed under a condition of 140°C in temperature and 1.3 MPa in pressure, whereby an automotive laminated glass was obtained.

(Examples 2 to 22)

Automotive laminated glasses were obtained similarly to in Example 1 except that constitutions of the automotive laminated glasses were altered to those listed in Table 1.

Regarding the automotive laminated glass obtained in each example, there was calculated a ratio ($G_1/G_2$) of the thickness $G_1$ of the vehicle exterior-side glass plate to the thickness $G_2$ of the vehicle interior-side glass plate positioned closest to the vehicle exterior side among the vehicle interior-side glass plates as well as a value of a left side of the above formula (1). Results thereof are listed in Table 1.

(Evaluation)

A sound insulating property, a foaming property, a yellowness index of each of the laminated glasses obtained in Examples 1 to 22 were measured as below and evaluation was carried out. Further, with regard to a resistance against a flying stone and comprehensive evaluation, evaluation was carried out based on criteria below. Results thereof will be listed in Table 2.

(1) Sound Insulating Property

In the laminated glass obtained above, a primary loss coefficient $\eta$ of 0 to 500 Hz in accordance with a mechanical impedance method (central excitation, half-power bandwidth method) based on ISO/PAS 16940:2004 was measured by using a central excitation measurement system (MA-5500, DS-2000) manufactured by Ono Sokki Co., Ltd. The larger value of the primary loss coefficient $\eta$ indicates the higher sound insulating property, and the sound insulating property of 0.4 or more was evaluated as good.

(2) Foaming Property

On the automotive laminated glass obtained in each example, a light irradiation test of 3000 hours was performed under a condition of 83°C in black panel temperature (BPT) and without rain by using a sunshine carbon arc lamp type weather-ometer (SWOM, manufactured by Suga Test Instruments Co., Ltd). There are cases where foams have grown in the intermediate film from an edge (outer peripheral end) toward a center side of the glass plate after the test. In the largest one of foams of such a case, a distance from the edge (outer peripheral end) of the intermediate film to an end portion on the glass plate center side of the foam was measured. When the measured distance from the edge was 3.8 mm or less, the foaming property was evaluated as good.

(3) Yellowness Index

On the automotive laminated glass obtained in each example, the light irradiation test of 3000 hours the same as that in the above-described foaming property test was performed, and a spectrum at a place of 10 mm in distance from the edge of the automotive laminated glass to the center thereof was measured by using a spectrophotometer (model number: U-4100, manufactured by Hitachi High-Technologies Corporation). From a measurement result, change (yellowness index: ΔYI) in yellowness index (YI) between before the test and after the test was calculated. The larger ΔYI indicates the stronger yellowing. The yellowness index: ΔYI of 0.4 or less is evaluated as good.

(4) Surface Density

A density per a unit area was calculated based on a mass and a surface area of the automotive laminated glass obtained in each example. The surface density of 12 kg/m$^2$ or less was evaluated as good.

(5) Resistance against Flying Stone

A total thickness of thicknesses of respective glasses constituting the automotive laminated glass obtained in each example was evaluated as below. Here, the total thickness of the glass plates of 1.3 mm or more, by which a strength or the like against a flying stone is excellent, was evaluated as good.

A: the total thickness of the glass plates is 1.3 mm or more
B: the total thickness of the glass plate is less than 1.3 mm

(6) Comprehensive Evaluation

In the property tests of the above (1) to (5) (sound insulating property, foaming property, yellowness index, surface density, resistance against flying stone), evaluation was carried out as below.

A: all the evaluations of the property tests are good.
B: there is one or more poor evaluation(s)in the property test.

[Table 1]

| Example | Automotive laminated glass | | | | | | | | | G$_1$/G$_2$ | Left side of formula (1) |
|---|---|---|---|---|---|---|---|---|---|---|---|
| | Thickness (mm) | | | | | | | | | | |
| | Vehicle exterior-side glass plate | Intermediate film | Vehicle interior-side glass plate | Intermediate film | Vehicle interior-side glass plate | Intermediate film | Vehicle interior-side glass plate | Total thickness | | | |
| | G$_1$ | P$_1$ | G$_2$ | P$_2$ | G$_3$ | P$_3$ | G$_4$ | | | | |
| 1 | 2.0 | 0.50 | 1.0 | 0.50 | 1.0 | - | - | 5.00 | | 2.000 | 0.22 |
| 2 | 2.0 | 0.50 | 1.3 | 0.50 | 0.7 | - | - | 5.00 | | 1.538 | 0.22 |
| 3 | 2.0 | 0.50 | 0.7 | 0.50 | 1.3 | - | - | 5.00 | | 2.857 | 0.22 |
| 4 | 2.0 | 0.50 | 1.5 | 0.50 | 0.4 | - | - | 4.90 | | 1.333 | 0.12 |
| 5 | 2.0 | 0.50 | 1.8 | 0.50 | 0.1 | - | - | 4.90 | | 1.111 | 0.12 |
| 6 | 1.8 | 0.50 | 1.0 | 0.50 | 1.0 | - | - | 4.80 | | 1.800 | 0.42 |
| 7 | 1.5 | 0.50 | 1.0 | 0.50 | 1.0 | - | - | 4.50 | | 1.500 | 0.72 |
| 8 | 1.4 | 0.50 | 1.0 | 0.50 | 1.0 | - | - | 4.40 | | 1.400 | 0.82 |
| 9 | 2.0 | 0.50 | 0.5 | 0.50 | 0.5 | 0.50 | 0.5 | 5.00 | | 4.000 | 0.06 |
| 10 | 2.0 | 0.76 | 0.5 | 0.76 | 0.5 | 0.76 | 0.5 | 5.78 | | 4.000 | 0.17 |
| 11 | 1.5 | 0.50 | 1.3 | 0.50 | 1.3 | - | - | 5.10 | | 1.154 | 1.32 |
| 12 | 2.0 | 0.50 | 1.3 | 0.50 | 0.8 | - | - | 5.10 | | 1.538 | 0.32 |
| 13 | 1.6 | 0.50 | 1.2 | 0.50 | 1.2 | - | - | 5.00 | | 1.333 | 1.02 |
| 14 | 2.0 | 0.76 | - | - | 2.0 | - | - | 4.76 | | - | 0.00 |
| 15 | 2.0 | 0.50 | - | 0.50 | 2.0 | - | - | 5.00 | | - | 0.22 |
| 16 | 2.0 | 0.76 | - | - | 1.6 | - | - | 4.36 | | - | 0.40 |
| 17 | 2.0 | 0.50 | 2.0 | 0.50 | 2.0 | - | - | 7.00 | | 1.000 | 2.22 |
| 18 | 1.5 | 0.50 | 1.5 | 0.50 | 1.5 | - | - | 5.50 | | 1.000 | 1.72 |
| 19 | 1.3 | 0.50 | 1.3 | 0.50 | 1.3 | - | - | 4.90 | | 1.000 | 1.52 |
| 20 | 1.1 | 0.50 | 1.1 | 0.50 | 1.1 | - | - | 4.30 | | 1.000 | 1.32 |
| 21 | 1.5 | 0.50 | 1.8 | 0.50 | 1.8 | - | - | 6.10 | | 0.833 | 2.32 |

(continued)

| Example | Automotive laminated glass | | | | | | | | | $G_1/G_2$ | Left side of formula (1) |
|---|---|---|---|---|---|---|---|---|---|---|---|
| | Thickness (mm) | | | | | | | | | | |
| | Vehicle exterior-side glass plate | Intermediate film | Vehicle interior-side glass plate | Intermediate film | Vehicle interior-side glass plate | Intermediate film | Vehicle interior-side glass plate | Total thickness | | | |
| | $G_1$ | $P_1$ | $G_2$ | $P_2$ | $G_3$ | $P_3$ | $G_4$ | | | | |
| 22 | 1.1 | 0.50 | 1.1 | 0.50 | 1.1 | 0.50 | 1.1 | 5.90 | | 1.000 | 2.64 |

[Table 2]

| Example | Evaluation | | | | | |
|---|---|---|---|---|---|---|
| | Sound insulating property (η) | Foaming property (mm) | Yellowness index (ΔYI) | Surface density (kg/m$^2$) | Resistance against flying stone | Comprehensive evaluation |
| 1 | 0.44 | 2.5 | 0.3 | 11.1 | A | A |
| 2 | 0.43 | 2.5 | 0.3 | 11.1 | A | A |
| 3 | 0.42 | 2.5 | 0.3 | 11.1 | A | A |
| 4 | 0.41 | 2.5 | 0.3 | 10.9 | A | A |
| 5 | 0.41 | 2.5 | 0.3 | 10.9 | A | A |
| 6 | 0.43 | 2.8 | 0.3 | 10.6 | A | A |
| 7 | 0.42 | 3.3 | 0.4 | 9.9 | A | A |
| 8 | 0.41 | 3.6 | 0.4 | 9.6 | A | A |
| 9 | 0.47 | 2.5 | 0.3 | 10.4 | A | A |
| 10 | 0.49 | 2.5 | 0.3 | 11.3 | A | A |
| 11 | 0.40 | 3.3 | 0.4 | 11.4 | A | A |
| 12 | 0.42 | 2.5 | 0.3 | 11.4 | A | A |
| 13 | 0.40 | 3.1 | 0.4 | 11.1 | A | A |
| 14 | 0.28 | 2.5 | 0.3 | 10.8 | A | B |
| 15 | 0.30 | 2.5 | 0.3 | 11.1 | A | B |
| 16 | 0.27 | 2.5 | 0.3 | 9.8 | A | B |
| 17 | 0.47 | 2.5 | 0.3 | 16.1 | A | B |
| 18 | 0.40 | 3.3 | 0.4 | 12.4 | A | B |
| 19 | 0.38 | 3.8 | 0.5 | 10.9 | B | B |
| 20 | 0.37 | 4.5 | 0.5 | 9.4 | B | B |
| 21 | 0.44 | 3.3 | 0.4 | 13.9 | A | B |
| 22 | 0.50 | 4.5 | 0.5 | 12.7 | B | B |

From Table 2, it is obvious that the automotive laminated glasses of the examples (Examples 1 to 13), even though the plate thickness of the glass plate is small for the sake of weight reduction, is excellent in sound insulating property and excellent in resistance against a flying stone, since the thickness of the vehicle exterior-side glass plate exceeds 1.3 mm Further, it is found that foaming and yellowing of the intermediate film is suppressed, resulting in unlikeliness of deterioration of the intermediate film.

EXPLANATION OF REFERENCE SINGS

10... automotive laminated glass, 1A... vehicle exterior-side glass plate, 1B, 1C... vehicle interior-side glass plate, 2... intermediate film, 2A, 2B... outer layer, 2C... core layer

**Claims**

1.  An automotive laminated glass comprising:

   three or more glass plates disposed in lamination; and
   a plurality of intermediate films each sandwiched between the respective glass plates,

wherein, among the glass plates, a vehicle exterior-side glass plate positioned closest to a vehicle exterior side has a thickness of 1.4 to 2.5 mm,
vehicle interior-side glass plates positioned closer to a vehicle interior side than the vehicle exterior-side glass plate each have a thickness smaller than the thickness of the vehicle exterior-side glass plate, and
the automotive laminated glass has a surface density of 12 kg/m$^2$ or less.

2. The automotive laminated glass according to claim 1 satistying a formula (1) below.
[Numerical Formula 1]

$$\left| \left( \sum_{i=2}^{k} G_i + 0.44 \times \sum_{j=2}^{k-1} P_j \right) - G_1 \right| \leqq 1.02 \qquad \cdots (1)$$

k: number of glass plates in the automotive laminated glass
k - 1: number of intermediate films in the automotive laminated glass
$G_i$: thickness of i-th glass plate from vehicle exterior side (unit: mm)
$P_j$: thickness of j-th intermediate film from vehicle exterior side (unit: mm)

3. The automotive laminated glass according to claim 1 or 2, wherein
the vehicle exterior-side glass plate has an ultraviolet transmittance of 50% or less.

4. The automotive laminated glass according to any one of claims 1 to 3,
wherein the vehicle exterior-side glass plate has a solar radiation transmittance of 80% or less.

5. The automotive laminated glass according to any one of claims 1 to 4,
wherein the the vehicle interior-side glass plate has thickness in a range of 0.5 mm to 1.3 mm.

6. The automotive laminated glass according to any one of claims 1 to 5,
wherein a ratio in thickness of the vehicle exterior-side glass plate to the glass plate positioned closest to the vehicle exterior side of the vehicle interior-side glass plates (thickness of the vehicle exterior-side glass plate (mm)/thickness of the glass plate positioned closest to the vehicle exterior side of the vehicle interior-side glass plates (mm)) is 1.154 or more.

7. The automotive laminated glass according to any one of claims 1 to 6,
wherein each of all of the plurality of intermediate films has the same thickness.

8. The automotive laminated glass according to any one of claims 1 to 7,
wherein the automotive laminated glass has a primary loss coefficient η of 0 to 500 Hz by a mechanical impedance method (using a centrally exited vibration method and half-value width calculation method) based on ISO/PAS 16940:2004 is 0.4 or more.

# FIG.1

## INTERNATIONAL SEARCH REPORT

| International application No. |
|---|
| PCT/JP2016/085901 |

**A. CLASSIFICATION OF SUBJECT MATTER**

*C03C27/12*(2006.01)i, *B60J1/00*(2006.01)i

According to International Patent Classification (IPC) or to both national classification and IPC

**B. FIELDS SEARCHED**

Minimum documentation searched (classification system followed by classification symbols)

C03C27/12, B60J1/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-326847 A (Asahi Glass Co., Ltd.),<br>12 November 2002 (12.11.2002),<br>claims 1, 9; paragraphs [0014] to [0016],<br>[0020], [0038], [0048]<br>& US 2002/0150744 A1<br>claims 1, 24; paragraphs [0020], [0021], [0028],<br>[0053], [0062] | 1,5-8<br>1-8 |
| Y | JP 2007-153691 A (Nippon Sheet Glass Co., Ltd.),<br>21 June 2007 (21.06.2007),<br>paragraphs [0011], [0030], [0035] to [0040];<br>examples 4 to 9<br>(Family: none) | 3,4 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 January 2017 (23.01.17) | 07 February 2017 (07.02.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/085901

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2015-120639 A  (Nippon Sheet Glass Co., Ltd.), 02 July 2015 (02.07.2015), claim 3; paragraphs [0001], [0005], [0019]; tables 2 to 4 & WO 2014/126252 A1 | 1-8 |
| Y | WO 2007/020792 A1  (Asahi Glass Co., Ltd.), 22 February 2007 (22.02.2007), paragraph [0078] & JP 5076896 B2          & JP 5076897 B2 & US 2008/0199670 A1 paragraph [0165] & US 2008/0206533 A1     & EP 1923362 A1 & EP 1923365 A1          & CN 101243022 A & CN 101243023 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7097241 A
- JP 2015527280 A